(19)

**Europäisches Patentamt**
**European Patent Office**
**Office européen des brevets**

(11)  **EP 4 787 525 A1**

(12)  # EUROPEAN PATENT APPLICATION

(43) Date of publication:
**05.08.2026 Bulletin 2026/32**

(21) Application number: **26154990.1**

(22) Date of filing: **29.01.2026**

(51) International Patent Classification (IPC):
*H01M 10/0562* (2010.01)    *H01M 10/613* (2014.01)
*H01M 10/647* (2014.01)    *H01M 10/653* (2014.01)
*H01M 10/654* (2014.01)    *H01M 10/655* (2014.01)

(52) Cooperative Patent Classification (CPC):
H01M 10/654; H01M 10/613; H01M 10/647;
H01M 10/653; H01M 10/655

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.02.2025 JP 2025016785**

(71) Applicant: **Toyota Jidosha Kabushiki Kaisha Toyota-shi, Aichi-ken 471-8571 (JP)**

(72) Inventor: **MIYAZAWA, Yuuki Toyota-shi, Aichi-ken 471-8571 (JP)**

(74) Representative: **Winter, Brandl - Partnerschaft mbB Alois-Steinecker-Straße 22 85354 Freising (DE)**

(54)  **SOLID-STATE BATTERY AND METHOD OF MANUFACTURING SOLID-STATE BATTERY**

(57)    There are provided a solid-state battery and a method of manufacturing a solid-state battery in which a heat dissipating material is accommodated between an electrode body and an exterior body, wherein, given that, in an environment of 25°C and at a current value of 0.5C, one cycle is charging from a charge level of 0% to 100% and discharging from a charge level of 100% to 0%, when, after a cycling test in which the cycle is repeated 200 times, the solid-state battery is charged to a charge level of 100% and thereafter discharged to a charge level of 0%, the heat dissipating material contacts both the electrode body and the exterior body.

FIG. 1

EP 4 787 525 A1

**Description**

BACKGROUND

Technical Field

The present disclosure relates to a solid-state battery and a method of manufacturing a solid-state battery.

Related Art

The demand for secondary batteries has been increasing in recent years, and in addition to secondary batteries having a liquid electrolyte, the development of solid-state batteries using a solid electrolyte has advanced. An all-solid-state battery, which is a type of solid-state battery, has a solid electrolyte layer instead of a liquid electrolyte. Because all-solid-state batteries do not use flammable organic solvents, safety devices can be simplified, and such batteries offer advantages in manufacturing cost and mass producibility.

As an all-solid-state battery cell by which there can be obtained a battery module having good cooling efficiency, there is known an all-solid-state battery cell in which, at the bottom surface of the battery cell, a first heat transfer material is disposed at the inner side of an exterior material so as to contact an electrode stack and the exterior material (Japanese Patent Application Laid-Open (JP-A) No. 2020-113496).

SUMMARY

In a solid-state battery, a heat dissipating material exhibits well the effect of cooling an electrode body by being in a state of contacting the electrode body and the exterior body. Accordingly, it is preferable that, even if the electrode body expands and contracts, the heat dissipating material does not peel off of the electrode body or the exterior body, and the state in which the heat dissipating material contacts the electrode body and the exterior body is maintained. However, the volume change characteristics of electrode bodies that are expansion and contraction differ in accordance with the material and the like of the electrode body, and therefore, there are cases in which, depending on the type of electrode body, the heat dissipating material peels off of the electrode body or the exterior body. Accordingly, it is desirable to maintain the state in which the heat dissipating material contacts the electrode body and the exterior body, even with electrode bodies of different types.

A topic that an embodiment of the present disclosure addresses is the provision of a solid-state battery and a method of manufacturing a solid-state battery that maintain a state in which a heat dissipating material contacts an electrode body and an exterior body, with high reliability and regardless of the type of the electrode body.

Means for addressing this topic include the following aspects.

A first aspect of the present disclosure provides a solid-state battery, in which a heat dissipating material is accommodated between an electrode body and an exterior body, wherein, given that, in an environment of 25°C and at a current value of 0.5C, one cycle is charging from a charge level of 0% to 100% and discharging from a charge level of 100% to 0%, when, after a cycling test in which the cycle is repeated 200 times, the solid-state battery is charged to a charge level of 100% and thereafter discharged to a charge level of 0%, the heat dissipating material contacts both the electrode body and the exterior body.

A second aspect of the present disclosure provides the solid-state battery of the first aspect, wherein the heat dissipating material contains a resin or an elastomer.

A third aspect of the present disclosure provides the solid-state battery of the second aspect, wherein the resin includes at least one type selected from silicone resins or acrylic resins.

A fourth aspect of the present disclosure provides the solid-state battery of any one of the first aspect through the third aspect , wherein the heat dissipating material contains a filler, and the filler includes at least one type selected from ceramic fillers or metal fillers.

A fifth aspect of the present disclosure provides the solid-state battery of any one of the first aspect through the fourth aspect , wherein a value of compression set of the heat dissipating material is lower than a value of compression set of a reference heat dissipating material that satisfies the following condition 1.

condition 1: the reference heat dissipating material contacts both the electrode body and the exterior body in a case in which an unused solid-state battery, in which the reference heat dissipating material is accommodated between the electrode body and the exterior body, is charged to a charge level of 100% and thereafter is discharged to a charge level of 0%.

A sixth aspect of the present disclosure provides the solid-state battery of any one of the first aspect through the fifth aspect, wherein a thermal conductivity of the heat dissipating material is less than 11.5 W/m•K, and compression set of the heat dissipating material is less than 98.8%.

A seventh aspect of the present disclosure provides the solid-state battery of any one of the first aspect through the sixth aspect, wherein the heat dissipating material is electrically insulating.

An eighth aspect of the present disclosure provides the solid-state battery of any one of the first aspect through the seventh aspect, wherein the solid-state battery is a prismatic battery.

A ninth aspect of the present disclosure provides the solid-state battery of any one of the first aspect through the eighth aspect, wherein the exterior body has a rectangular shape, and a surface of the exterior body that contacts the heat dissipating material is convex toward an interior of the solid-state battery.

A tenth aspect of the present disclosure provides the solid-state battery of any one of the first aspect through the ninth aspect, wherein the solid-state battery is an all-solid-state battery.

An eleventh aspect of the present disclosure provides a method of manufacturing a solid-state battery in which an electrode body and a heat dissipating material are accommodated in an exterior body, the method comprising: a step of accommodating the electrode body and the heat dissipating material in the exterior body such that the heat dissipating material contacts both the electrode body and the exterior body; and a step of compressing the heat dissipating material by pressing the electrode body in a layering axial direction of the electrode body and the heat dissipating material, wherein the heat dissipating material includes a material satisfying the following condition 2.

condition 2: in a solid-state battery in which the heat dissipating material is accommodated between the electrode body and the exterior body, given that, in an environment of 25°C and at a current value of 0.5C, one cycle is charging from a charge level of 0% to 100% and discharging from a charge level of 100% to 0%, when, after a cycling test in which the cycle is repeated 200 times, the solid-state battery is charged to a charge level of 100% and thereafter discharged to a charge level of 0%, the heat dissipating material contacts both the electrode body and the exterior body.

A twelfth aspect of the present disclosure provides the method of manufacturing a solid-state battery of the eleventh aspect, further comprising a step of sealing the electrode body and the heat dissipating material in the exterior body in a state in which the heat dissipating material is compressed.

A thirteenth aspect of the present disclosure provides the method of manufacturing a solid-state battery of the eleventh aspect or the twelfth aspect, further comprising a step of deforming a surface of the exterior body that contacts the heat dissipating material by pushing the exterior body toward a side of the heat dissipating material.

A fourteenth aspect of the present disclosure provides the method of manufacturing a solid-state battery of any one of the eleventh aspect through the thirteenth aspect, further comprising a step of injecting the heat dissipating material into a gap between the electrode body and the exterior body.

In accordance with embodiments of the present disclosure, there are provided a solid-state battery and a method of manufacturing a solid-state battery that maintain a state in which a heat dissipating material contacts an electrode body and an exterior body, with high reliability and regardless of the type of the electrode body.

BRIEF DESCRIPTION OF THE DRAWINGS

Fig. 1 is a schematic sectional view of a solid-state battery that explains the arrangement of an electrode body, a heat dissipating material and an exterior body in the solid-state battery, and is a schematic sectional view in which the solid-state battery is cut along a plane parallel to layering axial direction X;

Fig. 2 is a schematic sectional view of the solid-state battery that explains that a surface, which contacts the heat dissipating material, of the exterior body is a shape that is convex toward the interior of the solid-state battery, and is a schematic sectional view in which the solid-state battery is cut along a plane parallel to the layering axial direction X;

Fig. 3a is a schematic sectional view of the solid-state battery that explains a sealing step, and is a schematic sectional view in which the solid-state battery is cut along a plane parallel to the layering axial direction X;

Fig. 3b is a schematic sectional view of the solid-state battery that explains a compressing step, and is a schematic sectional view in which the solid-state battery is cut along a plane parallel to the layering axial direction X;

Fig. 3c is a schematic sectional view of the solid-state battery that explains the heat dissipating material that follows volume changes of the electrode body, and is a schematic sectional view in which the solid-state battery is cut along a plane parallel to the layering axial direction X; and

Fig. 4 is a schematic sectional view of the solid-state battery that explains an injecting step, and is a schematic sectional view in which the solid-state battery is cut along a plane parallel to the layering axial direction X.

DETAILED DESCRIPTION

In the present disclosure, numerical value ranges expressed by using "-" mean ranges in which the numerical values listed before and after the "-" are included as the minimum value and maximum value, respectively.

In numerical value ranges that are expressed in a stepwise manner in the present disclosure, the maximum value or the minimum value listed in a given numerical value range may be substituted by the maximum value or the minimum value of another numerical value range that is expressed in a stepwise manner. In the numerical value ranges put forth in the present disclosure, the maximum value or the minimum value listed in a given numerical value range may be substituted by a value set forth in the Examples.

In the present disclosure, "step" is not only an independent step and includes steps that, even in a case in which that step cannot be clearly distinguished from another step, achieve the intended object of that step.

In the present disclosure, combinations of two or more preferable aspects are more preferable aspects.

In the present disclosure, when an embodiment is described with reference to the drawings, the structure of the embodiment is not limited to the structure illustrated in the drawings. Further, the sizes of members in the respective drawings are schematic, and the relative relationships of the sizes of the members are not limited to these.

In the present disclosure, the term "charge level" includes the state of charge (SOC) and other conventional indices indicating the charged state of a battery.

<Solid-State Battery>

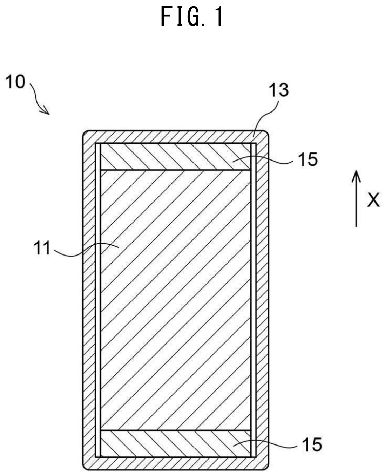

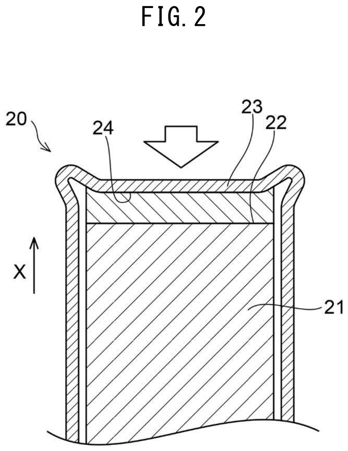

A solid-state battery that is an embodiment of the present disclosure is described by using Fig. 1 and Fig. 2. A solid-state battery relating to an embodiment of the present disclosure (hereinafter also called solid-state battery or battery) is a solid-state battery in which a heat dissipating material is accommodated between an electrode body and an exterior body, wherein, given that one cycle is, in an environment of 25°C and at a current value of 0.5C, charging from a state of charge of 0% to 100% and discharging from a state of charge of 100% to 0%, when, after a cycling test in which the cycle is repeated 200 times (hereinafter also called specific cycling test), the solid-state battery is charged to a state of charge of 100% and is thereafter discharged to a state of charge of 0%, the heat dissipating material contacts both the electrode body and the exterior body.

There is a strong possibility that the contact of this heat dissipating material with the electrode body and the exterior body will last from the initial stages of use to the final stages of use of the battery, with high reliability and regardless of the type of the electrode body. Therefore, a deterioration in the cooling effect of the heat dissipating material, which is due to the heat dissipating material peeling off of the electrode body or the exterior body, is suppressed, and the battery cooling performance can be ensured.

The present inventors examined the points that the expansion rate, the contraction rate and the like of an electrode body differ in accordance with the materials constituting the electrode body, and a heat dissipating material cannot follow volume changes of an electrode body within a battery, and there are cases in which the heat dissipating material peels from the inner surface of the exterior body or from the surface of the electrode body while the battery is in use. Then, the present inventors focused on physical properties, such as the compression set of the heat dissipating material, by which the heat dissipating material follows the space between the electrode body and the exterior body. The present inventors found that the state in which the heat dissipating material contacts the electrode body and the exterior body is maintained with high reliability and regardless of the type of the electrode body, in a case in which the heat dissipating material contacts both the electrode body and the exterior body at the time when, after the specific cycling test, the solid-state battery is charged to a state of charge of 100% and thereafter discharged to a state of charge of 0%.

The mechanism by which the state, in which the heat dissipating material contacts the electrode body and the exterior body within the battery, can be maintained with high reliability and regardless of the type of the electrode body is not clear. However, it is surmised that, in a case in which the heat dissipating material contacts both the electrode body and the exterior body at the time when, after the specific cycling test, the solid-state battery is charged to a state of charge of 100% and thereafter discharged to a state of charge of 0%, there is a strong possibility that the contacting state will last until the final stages of use of the battery. Further, the value of the compression set of the heat dissipating material reflects, to a certain extent, the shape-related characteristics of the heat dissipating material, even in a state in which the heat dissipating material is pushed by the electrode body and accommodated in the solid-state battery. Therefore, it is assumed that, by using the value of the compression set, there is a strong possibility that the state of contact of the heat dissipating material will last until the final stages of use of the battery, regardless of the type of the electrode body.

As illustrated in Fig. 1, in a solid-state battery 10, an electrode body 11 and heat dissipating materials 15 are accommodated in an exterior body 13. The heat dissipating materials 15 are disposed between the electrode body 11 and the exterior body 13 so as to contact both the electrode body 11 and the exterior body 13. Namely, the electrode body 11, the heat dissipating materials 15, and the exterior body 13 are layered. The electrode body 11, the heat dissipating materials 15, and the exterior body 13 are thereby joined thermally. Accordingly, the electrode body 11 is cooled due to heat that is generated by the electrode body 11 being transferred to the heat dissipating materials 15 that are heat transfer bodies and to the exterior body 13. Note that the layering axial direction of the electrode body 11 and the heat dissipating materials 15 is direction X. One of the heat dissipating materials 15 is accommodated at each of the both ends of the electrode body 11 in the layering axial direction X (i.e., lamination (stacking) direction X).

(Heat Dissipating Material)

The heat dissipating material is a material having the function of, by thermally joining the electrode body and the exterior body, transferring the heat generated by the electrode body to the exterior body, and cooling the electrode body. The heat dissipating material contacts both the electrode body and the exterior body at the time when, after the specific cycling test of the solid-state battery, the solid-state battery is charged to a state of charge of 100% and thereafter is discharged to a state of charge of 0%.

A cycling test of a lithium secondary battery is a test for confirming the durability at the time when charging/-discharging of the battery are repeated. The specific cycling test whose subject is the solid-state battery can be carried out by the method described hereinafter. Namely, the specific cycling test is a test in which a cycle is repeated 200 times, given that one cycle is, in an environment of 25°C and at a current value of 0.5C, charging from a state of charge of 0% to 100% and discharging from a state of charge of 100% to 0%. The durability after the charging/discharging cycles can be evaluated appropriately by the specific cycling test.

The state of charge (SOC) is an index expressing the charged state of the battery, and is a numerical value expressing what proportion the amount of electric power stored in the battery is with respect to the maximum capacity of the battery. 0% expresses that the battery is completely discharged, and 100% expresses the state of a full charge. Note that the state of charge can be measured by methods carried out conventionally, and, for example, can be measured by using the OCV (open circuit voltage) that is obtained for the solid-state battery.

The heat dissipating material contacts both the electrode body and the exterior body at the time when, after the specific cycling test, the solid-state battery is charged to a state of charge of 100% and thereafter is discharged to a state of charge of 0%. Due to the heat dissipating material satisfying the above-described condition, there is a strong possibility that the contact of the heat dissipating material with the electrode body and the exterior body will last from the initial stages of use to the final stages of use of the battery, with high reliability and regardless of the type of electrode body.

The heat dissipating material contacting both the electrode body and the exterior body means that one main surface of the heat dissipating material has a region that contacts at least the electrode body, and the another main surface of the heat dissipating material has a region that contacts at least the exterior body. The greater the surface area of contact between the one main surface of the heat dissipating material and the electrode body, the more preferable. Further, the greater the surface area of contact between the another main surface of the heat dissipating material and the exterior body, the more preferable.

From the standpoint of maintaining the state in which the heat dissipating material contacts the electrode body and the exterior body, it is preferable that the heat dissipating material contain a resin or an elastomer. Specifically, it is preferable that the heat dissipating material uses a resin in which a filler is compounded, or an elastomer in which a filler is compounded. Resins, fillers and elastomers that are used as heat dissipating materials of conventionally known solid-state batteries can be used. Note that an elastomer means a polymer material that is elastic, and thermoplastic elastomers are specific examples thereof.

From the standpoint of maintaining the state in which the heat dissipating material contacts the electrode body and the exterior body, examples of the resin are silicone resins, acrylic resins and epoxy resins. It is preferable that the resin include at least one type selected from silicone resins and acrylic resins.

From the standpoint of maintaining the state in which the heat dissipating material contacts the electrode body and the exterior body, examples of the filler are metal fillers and ceramic fillers. It is preferable that the ceramic filler includes at least one type selected from metal oxides and metal nitrides. Examples of metal fillers are copper and aluminum. Examples of ceramic fillers are alumina, silica, aluminum nitride and boron nitride. The electrical insulating ability of the heat dissipating material can be improved by using a ceramic filler. The above-described properties such as the compression set, the thermal conductivity and the electrical insulating ability of the heat dissipating material can be adjusted by the type, the compounding ratio and the like of the filler.

In the heat dissipating material, both thermal conductivity and hardness tend to increase as the filler loading increases. If the heat dissipating material is too soft, the material fails; accordingly, materials of higher hardness tend to exhibit lower compression set. However, when the heat dissipating material is hard, problems may arise: the resin is prone to damage, and it becomes difficult to form the heat dissipating material into a sheet. Therefore, to suppress an increase in hardness due to the addition of filler, it is preferable to control the hardness by lowering the molecular weight of the resin or by using a softer resin.

From the standpoint of maintaining the state in which the heat dissipating material contacts the electrode body and the exterior body, it is preferable that the value of the compression set of the heat dissipating material be lower than the value of the compression set of a reference heat dissipating material that satisfies following condition 1.

condition 1: the reference heat dissipating material is in contact with both the electrode body and the exterior body in an unused solid-state battery in which the reference heat dissipating material is accommodated between the electrode body and the exterior body, in a state in which the solid-state battery is charged to 100% state of charge (SOC) and thereafter discharged to 0% SOC.

In condition 1, it is preferable that the electrode body and the exterior body of the solid-state battery in which the reference heat dissipating material is accommodated to respectively be the same types as the electrode body and the exterior body of the solid-state battery in which the heat dissipating material is accommodated.

In the heat dissipating material that is accommodated in the solid-state battery, it is preferable that the value of the compression set of the heat dissipating material that has been removed from the solid-state battery satisfies above condition 1, but the value of the compression set before the heat dissipating material is accommodated in the solid-state battery may satisfy above condition 1. When selecting a heat dissipating material that follows the volume changes that accompany charging/discharging and that differ per type of electrode body, by measuring the compression set of the heat dissipating material, it is possible to select a heat dissipating material at which there is a strong possibility that the state of contact of the heat dissipating material with the electrode body and the exterior body will be maintained when the heat dissipating material is accommodated in the solid-state battery.

The compression set of the heat dissipating material or the reference heat dissipating material can be a value of compression set that is measured by the following measuring method. Namely, from the standpoint of the reliability of the contacting state of the heat dissipating material, it is preferable that compression set CS of the heat dissipating material be a value derived from following formula (1) by using a value that is measured when the heat dissipating material is compressed 25% of the thickness in the layering axial direction of the electrode body, and is maintained at 25°C for one minute, and thereafter, the compression is released. The size of the test piece can be, for example, a square whose initial dimensions are a length and width of 15 mm and that is a sheet of a thickness of 2 mm. Further, it is preferable to set plural measuring points of the test piece, and to use the average value thereof as the results of measurement. The specific method of measuring the compression set is not limited to the above example, and may differ in accordance with the type of the heat dissipating material for example. The measuring of the compression set may be in accordance with JIS K6262.

$$\text{compression set CS} = \{(h_0 - h_1)/(h_0 - h_s)\} \times 100 \qquad (1)$$

In formula (1),

$h_0$ is the thickness (unit: mm) in the layering axial direction of the heat dissipating material before compression,
$h_1$ is the thickness (unit: mm) in the layering axial direction of the heat dissipating material after the compression is released, and
$h_s$ is the thickness (unit: mm) in the layering axial direction of the heat dissipating material at the time of the compression.

From the standpoint of the heat dissipating function, and from the standpoint of maintaining the state in which the heat dissipating material contacts the electrode body and the exterior body, it is preferable that the thermal conductivity is less than 11.5 W/m•K, and that the compression set is less than 98.8%.

From the standpoint of maintaining the state in which the heat dissipating material contacts the electrode body and the exterior body, it is preferable that the compression set be 95% or less. From the standpoint of the heat dissipating material exhibiting a heat dissipating function appropriately, the thermal conductivity is more preferably less than 8 W/m•K, and is even more preferably less than 6 W/m•K, and is particularly preferably less than 4 W/m•K. Further, from the standpoint of the heat dissipating material exhibiting a heat dissipating function appropriately, the thermal conductivity is preferably greater than 2 W/m•K. The thermal conductivity of the heat dissipating material can be adjusted by the composition of the heat dissipating material or the like.

The thermal conductivity of the heat dissipating material is a value measured by the heat flow meter technique in accordance with ASTM E 1530. The compression set can be measured by the measuring method described above.

From the standpoint of safety of the battery, the heat dissipating material is preferably electrically insulating. Due to the heat dissipating material being electrically insulating, short circuiting of the solid-state battery can be prevented. The heat dissipating material being electrically insulating can be judged from various indices such as the dielectric breakdown, volume resistivity and dielectric constant of the heat dissipating material. The electrical insulating property of the heat dissipating material can be adjusted by the composition of the heat dissipating material or the like. For example, as described above, an electrical insulating property can be imparted by the type of the filler contained in the heat dissipating material.

In a case of using the dielectric breakdown, a case in which the dielectric breakdown of the heat dissipating material is 10 kV/mm or more can be considered as being electrically insulating. The dielectric breakdown is more preferably 15 kV/mm or more, and even more preferably 20 kV/mm or more. Note that, when using the volume resistivity, a case in which the volume resistivity of the heat dissipating material exceeds $1 \times 10^{12}$ Ω·cm can be considered to be a heat dissipating material that is electrically insulating. Further, in a case of using the surface resistivity, a case in which the surface resistivity of the heat dissipating material exceeds $1 \times 10^{12}$ Ω/□ is considered to be a heat dissipating material that is electrically insulating.

The shape of the heat dissipating material depends also on the type of the solid-state battery, but, from the standpoint of maintaining the state in which the heat dissipating material contacts the electrode body and the exterior body, for example, the initial thickness is preferably 0.5 mm - 4.0 mm, and is more preferably 0.8 mm - 3.7 mm, and is even more preferably 1.7 mm - 3.2 mm. Further, at the time of placing the heat dissipating material within the solid-state battery, the thickness in the state in which the heat dissipating material is pushed by the electrode body in the direction of the exterior body and is fit closely thereto is preferably 0.20 mm - 3.8 mm, and more preferably 0.5 mm - 3.5 mm, and even more preferably 1.0 mm - 3.0 mm.

In the solid-state battery, it is preferable that the heat dissipating material is in a state of contacting both the electrode body and the exterior body. Due to the heat dissipating material being in a state of contacting both the electrode body and the exterior body, the state in which the heat dissipating material contacts the electrode body and the exterior body can be maintained, and the cooling performance can be ensured. Due to the heat dissipating material being a material that contacts both the electrode body and the exterior body at the time when, after the specific cycling test, the solid-state battery is charged to a state of charge of 100% and thereafter is discharged to a state of charge of 0%, there is a strong possibility that the contacting state of the heat dissipating material contacting the electrode body and the exterior body continuously will be maintained regardless of the type of the electrode body, and further, regardless of the state of charge of the battery, i.e., the extent of charging or discharging of the battery, or how many cycles of charging and discharging the battery has undergone. Accordingly, at the solid-state battery, the state in which the heat dissipating material contacts the electrode body and the exterior body can be maintained with high reliability, and the cooling performance can be maintained.

(Electrode Body)

The electrode body can be a conventionally known electrode body that is used in solid-state batteries. Solid-state batteries include semi-solid-state batteries and all-solid-state batteries. Any type of electrode body can be used provided that it is an electrode body that is used in a solid-state battery. For example, the electrode body is an electrode body in which a negative-electrode electrode layer, a negative electrode layer, an electrolyte layer, a positive electrode layer, and a positive-electrode electrode layer are layered in that order. In a solid-state battery, there are cases in which the electrode body expands or contracts due to the electrode active material that is contained in the negative electrode layer or the positive electrode layer expanding or contracting due to charging and discharging. However, due to the solid-state battery that is an embodiment of the present disclosure using the above-described heat dissipating material, the heat dissipating material follows the expansion or contraction of the electrode body, and the state in which the heat dissipating material contacts the electrode body and the exterior body is maintained regardless of the type of the electrode body. Accordingly, the battery cooling performance can be ensured regardless of the type of the electrode body. The electrode body is preferably an electrode body that is used in an all-solid-state battery. From the standpoint of the volume changes of expansion or contraction of the electrode body, the effects of the solid-state battery that is an embodiment of the present disclosure are more effective in cases in which the electrode body is an electrode body that is used in an all-solid-state battery.

(Exterior Body)

The exterior body has the function of segregating the internal materials of the battery from the external environment and ensuring safety and stability of the battery, and the function of thermally joining with the heat dissipating material and cooling the electrode body. With regard to the shape and the material and the like of the exterior body, conventionally known exterior bodies that are used in solid-state batteries can be used. From the standpoint of compressing the heat dissipating material, the exterior body is preferably a rectangular shape. Accordingly, the solid-state battery is preferably a prismatic battery. Due to the exterior body having a rectangular shape, the electrode body and the heat dissipating material that are at the interior of the exterior body are compressed preferably by the deformation of at least either of the electrode body and the exterior body.

It is preferable that the exterior body has a rectangular shape and that the surface thereof that contacts the heat dissipating material is formed in a shape that is convex toward the interior of the solid-state battery. The surface that contacts the heat dissipating material is a surface of the exterior body that intersects the layering axial direction, and is a surface that contacts a main surface of the heat dissipating material. Due to this convex surface of the exterior body, even if there are volume changes of the electrode body at the interior of the battery, there is a state in which pressure is applied well to the electrode body, and further, the close fit of the electrode body, the heat dissipating material and the exterior body can be improved.

As illustrated in Fig. 2, at a solid-state battery 20, surface 24, which contacts heat dissipating material 22, of an exterior body 23 is convex toward the interior of the solid-state battery 20. In manufacturing the solid-state battery 20, an electrode body 21 and the heat dissipating material 22 are first housed in the exterior body 23 that has a rectangular shape. The heat dissipating material 22 is disposed between the electrode body 21 and the exterior body 23. The electrode body 21 and the heat dissipating material 22 are sealed within the exterior body 23, and the solid-state battery 20 is formed. Thereafter, the surface 24, which contacts the heat dissipating material 22, of the exterior body 23 is molded so as to be convex toward the interior of the solid-state battery 20. Specifically, force is applied from the outer surface of the exterior body 23 in the direction of the white arrow, and the surface 24 is molded so as to be convex toward the interior of the solid-state battery 20. Owing to the convex shape of the surface 24, there is a state in which pressure is applied well to the electrode body 21, and further, the heat dissipating material 22 is compressed and is fit more securely to the electrode body 21 and the exterior body 23.

(Type of Solid-State Battery)

The type of the solid-state battery is not particularly limited, and is typically a lithium ion battery. Further, the solid-state battery that is an embodiment of the present disclosure is preferably a secondary battery. This is because a secondary battery can be charged/discharged repeatedly, and is useful as the battery for a vehicle for example. The solid-state battery may be a semi-solid-state battery, or may be an all-solid-state battery.

The solid-state battery is preferably an all-solid-state battery. In an all-solid-state battery, depending on the types of active materials that the electrode layers contain, there are cases in which there is great expansion/contraction during charging/discharging, and the volume changes of the electrode body are great. Accordingly, the effect that the state in which the heat dissipating material contacts the electrode body and the exterior body is maintained with high reliability and regardless of the type of the electrode body, which effect is due to the solid-state battery that is an embodiment of the present disclosure, is more effective in a case in which the solid-state battery is an all-solid-state battery.

<Method of Manufacturing Solid-State Battery>

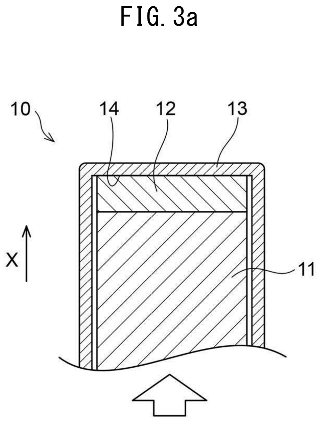

A method of manufacturing a solid-state battery that is an embodiment of the present disclosure is described hereinafter by using Fig. 3a through Fig. 4.

The method of manufacturing a solid-state battery that is an embodiment of the present disclosure is a method of manufacturing a solid-state battery in which an electrode body and a heat dissipating material are accommodated in an exterior body, and includes an accommodating step and a compressing step. The accommodating step is a step of accommodating the electrode body and the heat dissipating material in the exterior body such that the heat dissipating material contacts both the electrode body and the exterior body. The compressing step is a step of compressing the heat dissipating material by pushing-in the electrode body in the layering axial direction of the electrode body and the heat dissipating material. The heat dissipating material includes a material satisfying following condition 2. condition 2: in a solid-state battery in which the heat dissipating material is accommodated between the electrode body and the exterior body, in a state in which, after a specific cycling test, the solid-state battery is charged to 100% state of charge (SOC) and thereafter discharged to 0% SOC, the heat dissipating material is in contact with both the electrode body and the exterior body.

(Accommodating Step)

The accommodating step is a step of accommodating the electrode body and the heat dissipating material in the exterior body such that the heat dissipating material is disposed between the electrode body and the exterior body. In the accommodating step, for example, into a box-shaped exterior body whose one surface is an opening, first, the heat dissipating material is accommodated from the opening, and thereafter, the electrode body is accommodated from the opening. Due thereto, the electrode body and the heat dissipating material can be accommodated in the exterior body such that the heat dissipating material is disposed between the electrode body and the exterior body.

(Compressing Step)

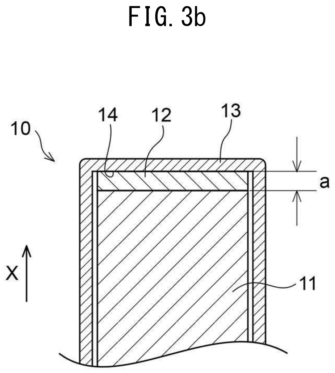

The compressing step is a step of compressing the heat dissipating material. For example, at the time of accommodating the electrode body and the heat dissipating material into the exterior body, after the heat dissipating material is accommodated in the exterior body, the electrode body is pushed-in in the layering axial direction, and the heat dissipating material is thereby pushed against the exterior body. Due thereto, the close fit between the electrode body, the heat dissipating material and the exterior body is improved. Although it depends on the type of the solid-state battery as well, the compressing of the heat dissipating material is preferably 5% - 60%, and more preferably 10% - 50%, and even more preferably 15% - 40%, based on the thickness, in the layering axial direction, of the heat dissipating material before compression. Due to the compressing step, the heat dissipating material is fit closely to both the electrode body and the exterior body, and the thickness thereof in the layering axial direction (arrow X in Fig. 3b) is reduced.

In the accommodating step, the heat dissipating material 15 is accommodated in the exterior body 13 from the opening of the exterior body 13, and the heat dissipating material is accommodated so as to contact a surface 14, which is one surface of the exterior body 13 and which contacts the heat dissipating material 15 (see Fig. 3a). Thereafter, the electrode body 11 is accommodated from the opening. The opening of the exterior body 13 is provided, for example, at the surface, which faces of the surface 14, of the exterior body 13. The compressing step that is carried out following the accommodating step is a step of compressing the heat dissipating material 15 by pushing-in the electrode body 11 in the layering axial direction of the electrode body 11, the heat dissipating material 15 and the exterior body 13 (see Fig. 3b). Due to the compressing step, the heat dissipating material 15 is fit closely to both the electrode body 11 and the exterior body 13.

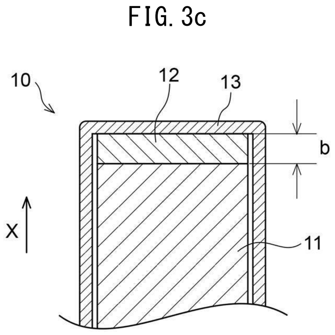

Note that the heat dissipating material 15 can be made to follow volume changes of the electrode body 11. As illustrated in Fig. 3c, even in a case in which the electrode body 11 contracts, the contacting state of the heat dissipating material 15 with the electrode body 11 and the exterior body 13 is maintained due to the heat dissipating material 15 following the contraction of the electrode body 11 while changing from thickness a to thickness b in the layering axial direction X.

The heat dissipating material includes a material satisfying condition 2. Condition 2 is a condition satisfied by a material contained in the heat dissipating material. By manufacturing a solid-state battery by using a heat dissipating material that includes a material satisfying condition 2, a solid-state battery, in which the state in which the heat dissipating material contacts the electrode body and the exterior body is maintained with high reliability and regardless of the type of the electrode body, can be manufactured.

In condition 2, it is preferable that the electrode body and the exterior body of the solid-state battery in which the material is accommodated are respectively the same types as the electrode body and the exterior body of the solid-state battery in which the heat dissipating material is accommodated. In condition 2, in a solid-state battery that is manufactured by using the electrode body and the exterior body, the material contacts both the electrode body and the exterior body at the time when, after the specific cycling test, the solid-state battery is charged to a state of charge of 100% and thereafter discharged to a state of charge of 0%. Details of the material are similar to those of the heat dissipating material described above.

(Sealing Step)

It is preferable that the method have, after the compressing step, a sealing step of sealing the electrode body and the heat dissipating material in the exterior body in the state in which the heat dissipating material is compressed. By sealing the electrode body and the heat dissipating material in the exterior body in a state in which the heat dissipating material is compressed, the state in which the electrode body, the heat dissipating material and the exterior body are fit closely together can be maintained, and the electrode body can be set in a state in which pressure is applied thereto well. Specifically, the sealing can be carried out by closing the opening of the exterior body while the state in which the electrode body compresses the heat dissipating material remains as is.

(Deforming Step)

It is preferable that the method have, after the sealing step, a deforming step of deforming the surface, which contacts the heat dissipating material, of the exterior body by pushing the exterior body toward the heat dissipating material side. Due thereto, the close fit between the electrode body, the heat dissipating material and the exterior body is improved, and the state in which pressure is applied to the electrode body can be made to be an even better state. In the deforming step, it is preferable to deform the surface, which contacts the heat dissipating material, of the exterior body to become a shape that is convex toward the battery interior.

(Injecting Step)

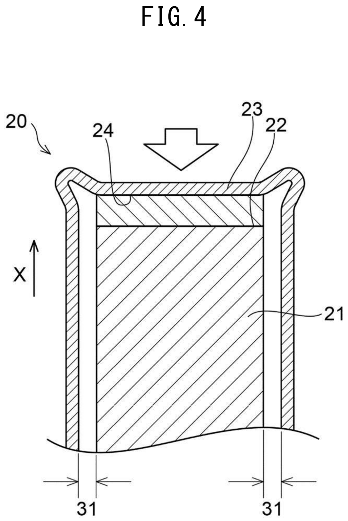

It is preferable that the method have, after the sealing step, an injecting step of injecting the heat dissipating material into the gap between the electrode body and the exterior body. Due to the heat dissipating material being injected into the gap between the electrode body and the exterior body, and the gap that exists between the electrode body and the exterior body being made to be as small as possible, the close fit between the electrode body and the heat dissipating material improves due to expansion of the electrode body, and the heat dissipating material can move the heat of the electrode body to the exterior body over wider surfaces, and this is therefore preferable. As illustrated in Fig. 4, in the injecting step, the heat dissipating material is injected into gap 31 between the electrode body 21 and the exterior body 23.

It is preferable that the exterior body have a rectangular shape, and that the surface thereof that contacts the heat dissipating material is convex toward the interior of the solid-state battery. Due to the exterior body having a rectangular shape, it is easy to fit the heat dissipating material close to one surface of the exterior body in the compressing step, and this is therefore preferable. Further, due to the exterior body having a rectangular shape, in the deforming step, the surface, which contacts the heat dissipating material, of the exterior body can be deformed so as to become convex toward the battery interior. Due thereto, the close fit between the electrode body, the heat dissipating material and the exterior body can be improved more effectively (see Fig. 2 or Fig. 4).

It is preferable that at least one of the deforming step and the injecting step is carried out after the sealing step. Only one of the deforming step and the injecting step may be carried out, or both the deforming step and the injecting step may be carried out. If both the deforming step and the injecting step are carried out, although the order thereof does not matter, it is preferable to carry out the deforming step after the injecting step. This is because the effects due to the deforming step are exhibited better.

<Applications of Solid-State Battery>

Examples of applications of the solid-state battery are use as the power source of a vehicle such as a hybrid vehicle (HEV), a plug-in hybrid vehicle (PHEV), a battery electric vehicle (BEV), a gasoline-powered vehicle and a diesel-powered vehicle. In particular, the solid-state battery is preferably used as the power source for driving of a hybrid electric vehicle (HEV), a plug-in hybrid electric vehicle (PHEV), or a battery electric vehicle (BEV). Further, the solid-state battery may be used as the power source of a moving body other than a vehicle (e.g., a train, ship or airplane), or may be used as the power source for an electric product such as an information processing device.

EXAMPLES

The present disclosure is described more concretely by way of the following Examples. The scope of the present disclosure is not limited to the following Examples.

(Heat Dissipating Material)

Various types of heat dissipating materials that were heat dissipating material 1 - heat dissipating material 6 were prepared. The type of resin or elastomer that was contained, the type of filler, the content and the like in heat dissipating material 1 - heat dissipating material 6 were respectively different, and the compositions thereof were respectively different. The compression set CS (%) of each of heat dissipating material 1 - heat dissipating material 6 was measured by the following method.

Each heat dissipating material was formed into a sheet having initial dimensions of 15 mm in length and 15 mm in width. A 0.1-mm-thick polyethylene terephthalate (PET) sheet was placed on both surfaces of the heat dissipating material, and the heat dissipating material was compressed in the thickness direction. The measurement conditions for the compression set CS (%) were as follows: the heat dissipating material was compressed by 25% in the thickness direction and held at 25 °C for one minute; the compression was then released, and the thickness was measured. Let $h_0$ denote the thickness (mm) in the stacking (layering-axial) direction of the heat dissipating material before compression, let $h_1$ denote the thickness (mm) after release of compression, and let hs denote the thickness (mm) during compression; the compression set CS (%) is the value calculated by the following formula (1). compression set CS = $\{(h_0-h_1)/(h_0-h_s)\}\times 100$ (1)

[Table 1]

| | thickness $h_0$ before compression (mm) | thickness $h_s$ at time of compression (mm) | thickness $h_1$ after compression released (mm) | compression set CS (%) |
|---|---|---|---|---|
| heat dissipating material 1 | 1.90 | 1.40 | 1.55 | 70% |
| heat dissipating material 2 | 2.00 | 1.50 | 1.58 | 84% |
| heat dissipating material 3 | 1.90 | 1.40 | 1.55 | 70% |
| heat dissipating material 4 | 2.00 | 1.50 | 1.62 | 76% |
| heat dissipating material 5 | 1.40 | 1.10 | 1.10 | 100% |
| heat dissipating material 6 | 2.00 | 1.50 | 1.51 | 98% |

The compositions and properties of heat dissipating material 1 - heat dissipating material 6 respectively are listed in Table 2.

In Table 2, the thermal conductivity (W/m•K) is a value measured by the heat flow meter technique in accordance with ASTM E 1530. The Young's modulus (MPa) is a value measured by the tensile test based on JIS K 7162. The hardness (Asker C) is a value measured by an Asker durometer type C. The specific gravity is a value measured by the water displacement method in accordance with JIS K 7112.

[Table 2]

|  | material | thermal conductivity (W/ m•K) | compression set CS (%) | Young's modulus (MPa) | hardness Asker C | specific gravity | filler used |
|---|---|---|---|---|---|---|---|
| heat dissipating material 1 | elastomer | 2.0 | 70 | 1.00 | 80 | 2 | metal oxide |
| heat dissipating material 2 | silicone | 4.5 | 84 | 0.48 | 14 | 3 | metal oxide |
| heat dissipating material 3 | acrylic | 3.0 | 70 | 0.44 | 10 | 3 | metal oxide |
| heat dissipating material 4 | silicone | 4.5 | 76 | 0.40 | 20 | 3 | metal oxide |
| heat dissipating material 5 | silicone | 8.0 | 100 | 0.00 | 0 | 3 | metal oxide and metal nitride |
| heat dissipating material 6 | silicone | 11.5 | 98 | 0.00 | 0 | 3 | metal oxide and metal nitride |

(Electrode Body)

1. Electrode Body A

Electrode body A was an electrode body used in an all-solid-state battery, and was prepared by layering, in that order, a negative-electrode electrode layer, a negative electrode layer, an electrolyte layer, a positive electrode layer, and a positive-electrode electrode layer. Electrode body A was a rectangular parallelepiped whose dimensions were a length of 100 mm, a width of 280 mm, and a thickness of 20 mm.

2. Electrode Body B

Electrode body B, which was similar to electrode body A except that the positive electrode material and the negative electrode material were different than those of electrode body A, was prepared in the same way as the case of electrode body A.

(Exterior Body)

The exterior body was a rectangular parallelepiped can that was molded by using an aluminum material, and the size thereof was a length of 105 mm, a width of 300 mm, and a thickness of 0.3 mm.
<Example 1 - Example 7, and Comparative Example 1 - Comparative Example 5> The accommodating step and the compressing step were carried out by using the above-described heat dissipating material 1 - heat dissipating material 6, electrode body A or electrode body B, and the exterior body, and solid-state batteries were respectively produced.

(Evaluation)

Images obtained by CT scanning the heat dissipating materials of the respective solid-state batteries at the time when the solid-state battery was charged to a state of charge of 100% and thereafter discharged to a state of charge of 0% were visually observed in each of the following stages that were (stage a) - (stage c). The evaluation standards are listed in Table 3. Among the evaluation standards, A is considered to be a passing grade.

(stage a): a case in which the solid-state battery was unused
(stage b): after the specific cycling test was carried out
(stage c): after the specific cycling test was carried out again after the specific cycling test had been carried out, i.e., after the specific cycling test was carried out two times in a row

The specific cycling test was a test in which, given that one cycle is, in an environment of 25°C and at a current value of 0.5C, charging of the solid-state battery from a state of charge of 0% to 100% and discharging from a state of charge of 100% to 0%, the cycle was repeated 200 times.

= Evaluation Standards =

A: The heat dissipating material contacts both the electrode body and the exterior body.
B: The heat dissipating material contacts only one of the electrode body and the exterior body.
C: The heat dissipating material does not contact the electrode body nor the exterior body.

[Table 3]

| | heat dissipating material | compression set CS (%) | electrode body | results of observation | | |
|---|---|---|---|---|---|---|
| | | | | stage a (unused) | stage b (after 200 cycles) | stage c (additional 200 cycles after 200 cycles) |
| ex. 1 | heat dissipating material 1 | 70 | A | A | A | A |
| ex. 2 | heat dissipating material 1 | 70 | B | A | A | A |
| ex. 3 | heat dissipating material 2 | 84 | A | A | A | A |
| comp. ex. 1 | heat dissipating material 2 | 84 | B | B | B | C |
| ex. 4 | heat dissipating material 3 | 70 | A | A | A | A |
| ex. 5 | heat dissipating material 3 | 70 | B | A | A | A |
| ex. 6 | heat dissipating material 4 | 76 | A | A | A | A |
| ex. 7 | heat dissipating material 4 | 76 | B | A | A | A |
| comp. ex. 2 | heat dissipating material 5 | 100 | A | B | C | C |
| comp. ex. 3 | heat dissipating material 5 | 100 | B | B | C | C |
| comp. ex. 4 | heat dissipating material 6 | 98 | A | C | C | C |
| comp. ex. 5 | heat dissipating material 6 | 98 | B | C | C | C |

From the above results, it can be understood that the state in which the heat dissipating material contacts both the electrode body and the exterior body is maintained with high reliability and regardless of the type of the electrode body, in the solid-state batteries in which the heat dissipating material is accommodated between the electrode body and the exterior body and in which, when, after the specific cycling test, the solid-state battery is charged to a state of charge of 100% and thereafter discharged to a state of charge of 0%, the heat dissipating material contacts both the electrode body and the exterior body.

**Claims**

1. A solid-state battery, in which a heat dissipating material is accommodated between an electrode body and an exterior body,
wherein, given that, in an environment of 25°C and at a current value of 0.5C, one cycle is charging from a charge level of 0% to 100% and discharging from a charge level of 100% to 0%, when, after a cycling test in which the cycle is repeated 200 times, the solid-state battery is charged to a charge level of 100% and thereafter discharged to a charge level of 0%, the heat dissipating material contacts both the electrode body and the exterior body.

2. The solid-state battery of claim 1, wherein the heat dissipating material contains a resin or an elastomer.

3. The solid-state battery of claim 2, wherein the resin includes at least one type selected from silicone resins or acrylic resins.

4. The solid-state battery of claim 1, wherein:

   the heat dissipating material contains a filler, and
   the filler includes at least one type selected from ceramic fillers or metal fillers.

5. The solid-state battery of claim 1, wherein a value of compression set of the heat dissipating material is lower than a value of compression set of a reference heat dissipating material that satisfies the following condition 1:
condition 1: the reference heat dissipating material contacts both the electrode body and the exterior body in a case in which an unused solid-state battery, in which the reference heat dissipating material is accommodated between the electrode body and the exterior body, is charged to a charge level of 100% and thereafter is discharged to a charge level of 0%.

6. The solid-state battery of claim 1, wherein a thermal conductivity of the heat dissipating material is less than 11.5 W/m•K, and compression set of the heat dissipating material is less than 98.8%.

7. The solid-state battery of claim 1, wherein the heat dissipating material is electrically insulating.

8. The solid-state battery of claim 1, wherein the solid-state battery is a prismatic battery.

9. The solid-state battery of claim 1, wherein the exterior body has a rectangular shape, and a surface of the exterior body that contacts the heat dissipating material is convex toward an interior of the solid-state battery.

10. The solid-state battery of claim 1, wherein the solid-state battery is an all-solid-state battery.

11. A method of manufacturing a solid-state battery in which an electrode body and a heat dissipating material are accommodated in an exterior body, the method comprising:

   a step of accommodating the electrode body and the heat dissipating material in the exterior body such that the heat dissipating material contacts both the electrode body and the exterior body; and
   a step of compressing the heat dissipating material by pressing the electrode body in a layering axial direction of the electrode body and the heat dissipating material,
   wherein the heat dissipating material includes a material satisfying the following condition 2:
   condition 2: in a solid-state battery in which the heat dissipating material is accommodated between the electrode body and the exterior body, given that, in an environment of 25°C and at a current value of 0.5C, one cycle is charging from a charge level of 0% to 100% and discharging from a charge level of 100% to 0%, when, after a cycling test in which the cycle is repeated 200 times, the solid-state battery is charged to a charge level of 100% and thereafter discharged to a charge level of 0%, the heat dissipating material contacts both the electrode body and the exterior body.

12. The method of manufacturing a solid-state battery of claim 11, further comprising a step of sealing the electrode body and the heat dissipating material in the exterior body in a state in which the heat dissipating material is compressed.

13. The method of manufacturing a solid-state battery of claim 11, further comprising a step of deforming a surface of the exterior body that contacts the heat dissipating material by pushing the exterior body toward a side of the heat dissipating material.

14. The method of manufacturing a solid-state battery of claim 11, further comprising a step of injecting the heat dissipating material into a gap between the electrode body and the exterior body.

FIG. 1

# FIG. 2

FIG. 3a

FIG. 3b

FIG. 3c

# FIG. 4

**EUROPEAN SEARCH REPORT**

Application Number

EP 26 15 4990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 150073 A (TOYOTA MOTOR CORP) 27 September 2021 (2021-09-27) | 1-7 | INV. H01M10/0562 |
| A | * paragraphs [0033] - [0037]; figures 1, 2 * | 9 | H01M10/613 H01M10/647 |
|   | ----- |   | H01M10/653 |
| X | US 2020/227777 A1 (TANIUCHI TAKUYA [JP] ET AL) 16 July 2020 (2020-07-16) | 1,5,7, 10-13 | H01M10/654 H01M10/655 |
| Y | * paragraphs [0027], [0035]; figure 1 * | 14 |   |
| A |   | 9 |   |
|   | ----- |   |   |
| X | KR 2023 0144416 A (SAMSUNG SDI CO LTD [KR]) 16 October 2023 (2023-10-16) | 1-3,5,8, 10-12 |   |
| A | * paragraphs [0006], [0016], [0064], [0065], [0074]; figures 2-4 * | 9 |   |
|   | ----- |   |   |
| Y | US 2020/194757 A1 (SCHIELER OLIVER [DE] ET AL) 18 June 2020 (2020-06-18) * paragraph [0074]; figure 4 * | 14 |   |
|   | ----- |   |   |

**TECHNICAL FIELDS SEARCHED (IPC)**

H01M

The present search report has been drawn up for all claims

| Place of search | Date of completion of the search | Examiner |
|---|---|---|
| The Hague | 4 June 2026 | Möller-Gulland, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 4990

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2026

| Patent document cited in search report | | | Publication date | Patent family member(s) | | Publication date |
|---|---|---|---|---|---|---|
| JP 2021150073 | A | | 27-09-2021 | JP 7435091 | B2 | 21-02-2024 |
| | | | | JP 2021150073 | A | 27-09-2021 |
| US 2020227777 | A1 | | 16-07-2020 | CN 111446505 | A | 24-07-2020 |
| | | | | JP 7136708 | B2 | 13-09-2022 |
| | | | | JP 2020113496 | A | 27-07-2020 |
| | | | | US 2020227777 | A1 | 16-07-2020 |
| KR 20230144416 | A | | 16-10-2023 | NONE | | |
| US 2020194757 | A1 | | 18-06-2020 | CN 111326690 | A | 23-06-2020 |
| | | | | DE 102018221988 | A1 | 18-06-2020 |
| | | | | US 2020194757 | A1 | 18-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020113496 A